# EUROPÄISCHE PATENTSCHRIFT

(11) **EP 0 562 544 B1**
(45) Veröffentlichungstag und Bekanntmachung des Hinweises auf die Patenterteilung: **05.06.1996**
(21) Anmeldenummer: 93104746.8
(22) Anmeldetag: 23.03.1993
(51) Int. Cl.: B65G 21/02, B65G 35/06

(54) **Gehäuse zur Aufnahme von Getriebemitteln eines Förderers**
Housing for containing gearing means of a conveyor
Boîtier pour contenir des moyens de transmission d'un convoyeur

(30) Priorität: 25.03.1992 DE 4209704
(43) Veröffentlichungstag der Anmeldung: 29.09.1993
(73) Patentinhaber: SCHÜCO International KG, D-33609 Bielefeld (DE)
(72) Erfinder: Nolte, Frank, Dipl.-Ing., D-4500 Osnabrück (DE); Diekmann, Bernd, Dipl.-Ing., D-4802 Halle/Westfalen (DE)
(74) Vertreter: Stracke, Alexander, Dipl.-Ing.

(56) Entgegenhaltungen:
- EP-A- 0 036 958
- DE-A- 3 635 065
- US-A- 4 930 623
- WERKSTATT UND BETRIEB Bd. 124, Nr. 9, September 1991, MUNCHEN DE Seiten ZM188 - ZM190 K. RUDAT

## Beschreibung

Die Erfindung bezieht sich auf ein Gehäuse zur Aufnahme von Getriebemitteln eines Förderers.

Es sind Maschinenbauprogramme bekannt, die zur Herstellung von Gestellen, Vorrichtungen und Maschinengrundgerüsten unter Verwendung von Profilschienen, die mindestens eine sich über die gesamte Schienenlänge erstreckende, mit hinterschnittenen Flächen versehene Nut und Kanäle aufweisen, die ebenfalls über die gesamte Profillänge verlaufen und zur Führung eines gasförmigen oder eines flüssigen Mediums eingesetzt werden können. Aus diesen Maschinenbauprogrammen werden Arbeitsplätze und Transporteinrichtungen gefertigt. Die entsprechenden Gehäuse für die Getriebemittel einer Transportstrecke werden bisher als Gußgehäuse oder als geschweißte Gehäuse ausgeführt. Diese Gehäuse sind auf eine spezielle Ausführung hin ausgelegt und lassen eine Variation hinsichtlich der Gehäusegröße und damit der Getriebeausstattung nur in engen Grenzen zu. Veränderungen im Getriebeaufbau erfordern in aller Regel den Entwurf und die Fertigung eines neuen Gehäuses.

Der Erfindung liegt die Aufgabe zugrunde, ein Gehäuse zur Aufnahme von Getriebemitteln eines Förderers so zu gestalten, daß es in einfacher Weise in unterschiedlichen Längen- und Höhenabmessungen gefertigt werden kann.

Diese Aufgabe wird erfindungsgemäß dadurch gelöst, daß zur Bildung der in Längsrichtung sich erstreckenden Schmalseiten Profilschienen, die mindestens an der dem Gehäuseinnern zugewandten Seite eine Nut mit hinterschnittenen Flächen aufweisen, vorgesehen sind, in die Nuten hakenförmige, die hinterschnittenen Flächen hintergreifende Stege von stranggepreßten Wandungsprofilen eingeführt sind und zwischen den benachbarten hakenförmigen Stegen Spreizmittel angeordnet sind, die die Stege auf Öffnungsränder der Nut pressen.

Sowohl die die in Längsrichtung sich erstreckenden Schmalseiten des Gehäuses bildenden Profilschienen als auch die Wandungsprofile sind stranggepreßte Profile, die z.B. in Längen von 6 m gefertigt werden und aus denen dann die gewünschten Gehäuseteile geschnitten werden. Für eine Änderung der Gehäuselänge ändert sich somit nur der Zuschnitt der stranggepreßten Profile.

Für eine Änderung der Gehäusetiefe ist die Wahl anders dimensionierter Strangpreßprofile erforderlich, jedoch bleibt das Konstruktionsprinzip erhalten.

Zur teilweisen oder vollständigen Abdeckung der Stirnöffnungen des Gehäuses werden Platten, vorzugsweise aus Blech gefertigt, verwendet, die mit den übrigen Gehäuseteilen fest oder lösbar verbunden werden.

Weitere Ausgestaltungen der Erfindung ergeben sich aus den Unteransprüchen.

Ausführungsbeispiele der Erfindung sind in den Zeichnungen dargestellt und werden im folgenden beschrieben. Es zeigen:

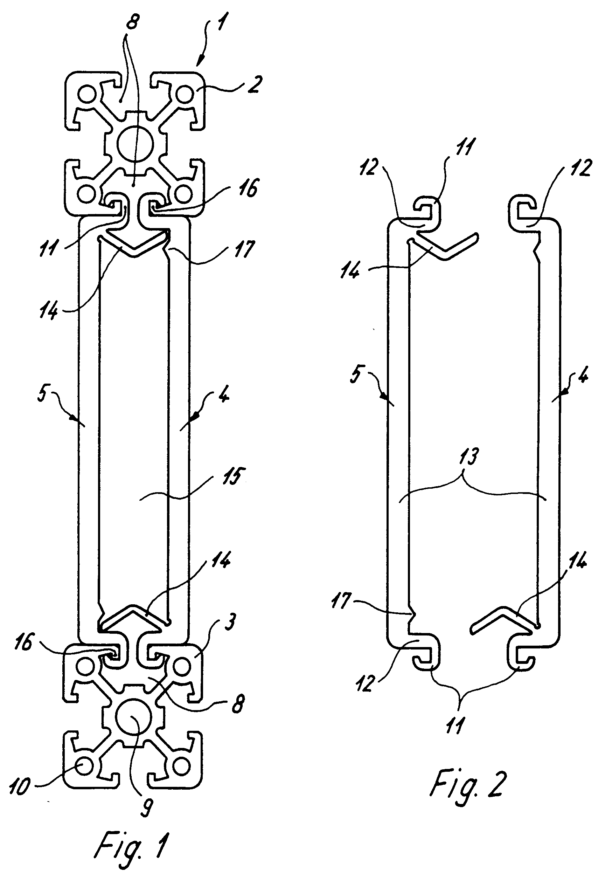

- Fig. 1: ein Gehäuse ohne die stirnseitige Abdeckung im Aufriß vor der Verspannung der Bauteile untereinander,
- Fig. 2: die in Fig. 1 benutzten Wandungsprofile im Aufriß,
- Fig. 3: eine Abwandlung des Gehäuses nach der Fig. 1 vor der endgültigen Festlegung der Bauteile,
- Fig. 4: eine weitere Ausführungsform des Gehäuses,
- Fig. 5: das Gehäuse als Teil eines Förderers zum Transport von Werkstückträgern, und
- Fig. 6: eine Ansicht in Richtung des Pfeiles VI in Fig. 5 unter Weglassung der stirnseitigen Abdeckung des Gehäuses.

Das Gehäuse 1 zur Aufnahme eines Getriebemittels setzt sich aus im Querschnitt übereinstimmenden Profilschienen 2,3, aus im Querschnitt übereinstimmenden Wandungsprofilen 4,5 und aus Platten 6,7 zusammen, von denen die Platte 6 die eine Stirnöffnung teilweise und die Platte 7 die andere Stirnöffnung vollständig abdeckt.

Die Profilschienen 2,3 weisen an jeder Seite eine mit hinterschnittenen Flächen versehene Nut 8 auf und sind mit einem mittigen Kanal 9 und mit im Eckbereich vorgesehenen Kanälen 10 versehen.

Die Wandungsprofile 4,5 sind mit hakenförmigen Stegen 11 ausgerüstet, die einstückig mit Leisten 12 sind, die von den Längsrändern der die Längsseiten des Gehäuses bildenden Wangen 13 ausgehen und sich zum Gehäuseinnern erstrecken.

Das Wandungsprofil 4,5 ist benachbart dem einen Längsrand mit einem Winkelsteg 14 ausgerüstet, der nach dem Einhängen der hakenförmigen Stege 11 der beiden Wandungsprofile 4,5 in die Nuten 8 der Profilschienen 2,3 und in eine gestreckte Lage gebracht wird. Dies kann dadurch erreicht werden, daß durch den Innenraum 15 des Gehäuses ein Dorn geführt wird, der sich an den Winkelstegen abstützt und diese in eine gestreckte Lage bringt, wobei sich die freien Enden der Winkelstege am gegenüberliegenden Wandungsprofil abstützen.

Die Winkelstege 14 bilden somit die Spreizmittel, durch die Teile der hakenförmigen Stege 11 auf die Öffnungsränder 16 der Nut 8 gepreßt werden.

Die Wandungsprofile 4,5 weisen an der Seite, an der kein Winkelsteg 14 vorgesehen ist, Nockenleisten 17 auf, an denen sich das freie Ende der Winkelstege 14 beim Verspannen der Bauteile des Gehäuses abstützt. Diese Nockenleisten sind in einem geringen Abstand von den Leisten 12 entfernt angebracht.

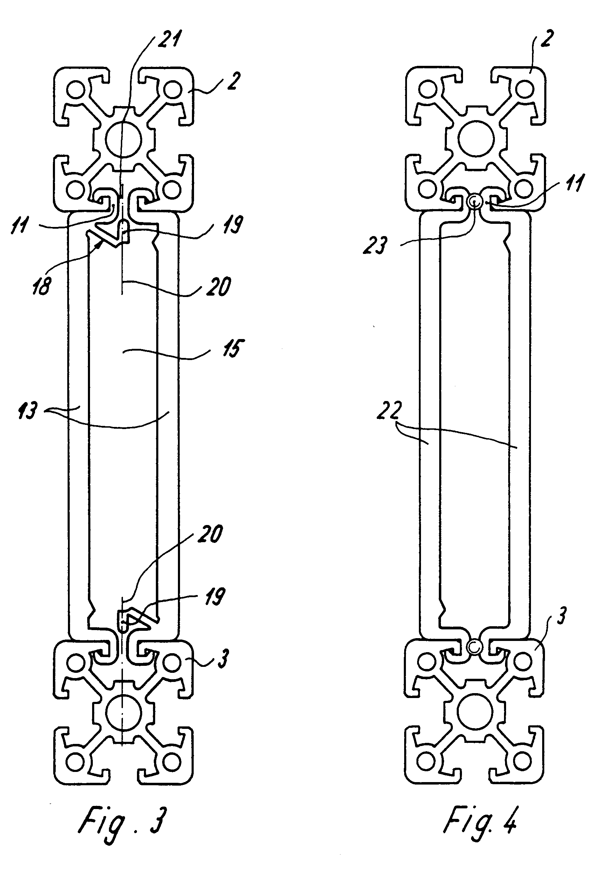

In der Fig. 3 ist eine Ausführungsform des Gehäuses aufgezeigt, bei der die Wandungsprofile 4,5 einen Winkelsteg 18 aufweisen, dessen Stegteil 19 in der Längsmittelebene 20 des Gehäuses liegt. Diese Stegteile 19 werden mittels eines Werkzeuges, das durch den Innenraum 15 des Gehäuses geführt wird, in den Spaltraum 21 eingetrieben, der von den hakenförmigen Stegen 11 begrenzt wird.

Die Fig. 4 zeigt ein weiteres Ausführungsbeispiel des Gehäuses, bei dem Winkelstege an den Wandungsprofilen 22 entfallen. Als Spreizmittel zwischen den hakenförmigen Stegen 11 der Wandungsprofile 22 werden Gewindestifte 23 benutzt, die in den Spaltraum zwischen den hakenförmigen Stegen eingeschraubt und sich teilweise in die hakenförmigen Stege 11 einschneiden.

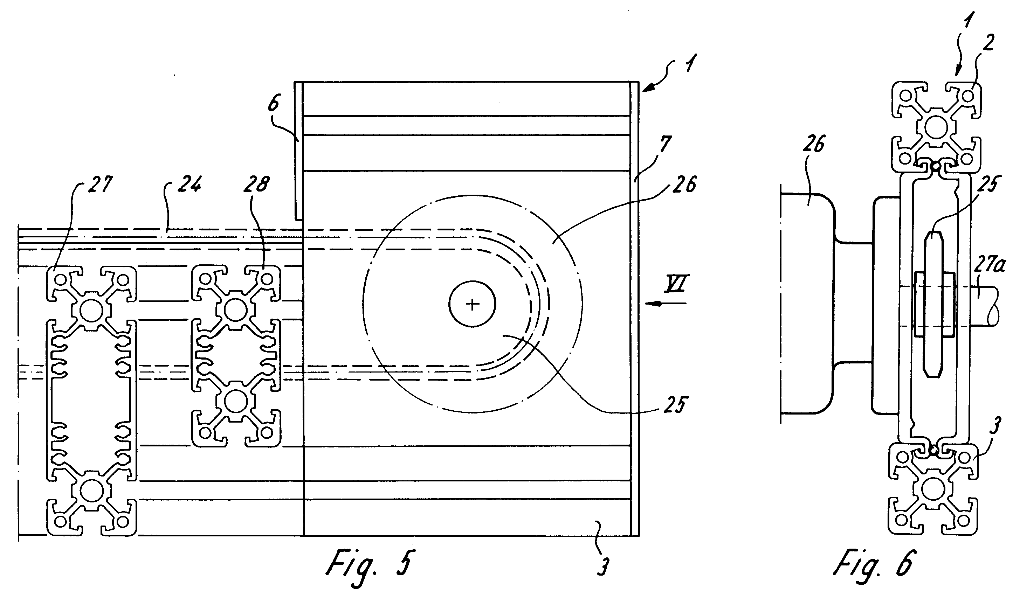

In der Fig. 5 ist das Gehäuse 1 als Teile eins Förderers dargestellt. Zu dem Förderer gehören an jeder Seite in Abstand voneinander angeordnete Gehäuse, da der Förderer zwei gleichsinnig bewegbare, endlose Fördermittel 24, vorzugsweise endlose Ketten, aufweist, die im Umlenkbereich um Kettenräder 25 geführt werden. Zum Antrieb dieser Kettenräder ist ein Motor 26 an das Gehäuse 1 geflanscht.

Aus der Fig. 5 ergibt sich, daß das Untergestell des Förderers zur Führung eines endlosen Fördermittels entweder aus einem stranggepreßten Profil 27 oder aus einem stranggepreßten Profil 28 gebildet sein kann. Das Profil 27 kann bis an die Stirnseite des Gehäuses 1 herangeführt und dort mit der Profilschiene 3 verbunden werden.

Sofern das Profil 28 eingesetzt wird, wird das Profil 3 stirnseitig aus dem Gehäuse herausgeführt, untergreift das Profil 28 und kann dann mit bekannten Verbindungsmitteln am Profil 28 festgelegt werden.

Von dem Antriebsmotor 26 kann über eine Welle 27 ein weiteres in einem zweiten Gehäuse gelagertes Kettenrad oder eine sonstige Umlenkscheibe angetrieben werden.

Die Bearbeitung der Gehäusewandungen für die Lagerung von Getriebeteilen, wie Motoren, Ritzel und Wellen kann vor dem Zusammenbau der Gehäuseteile vorgenommen werden. Eine solche Bearbeitung kann sich auch als notwendig erweisen, wenn nach innen gerichtete, kreisförmige Ausnehmungen für Lagerungen erforderlich sind, sofern Seitenanlageflächen für Lagerungselemente gewünscht werden, wobei auf zusätzliche axiale Lagerbegrenzungen, wie Seegerringe oder anschraubbare Flansche, verzichtet werden kann. Aufgrund des beschriebenen Aufbaus des Gehäuses kann ein Getriebe zwischen den Wangen 13 so weit vormontiert werden, daß die gesamte Einheit lediglich mit den Profilschienen 2 und 3 zusammengeschoben zu werden braucht. Die axiale Begrenzung der gelagerten Getriebeteile ist mithin ohne zusätzlichen mechanischen Aufwand möglich.

## Patentansprüche

1. Gehäuse zur Aufnahme von Getriebemitteln eines Förderers, dadurch gekennzeichnet, daß zur Bildung der in Längsrichtung sich erstreckenden Schmalseiten Profilschienen (2,3), die mindestens an der dem Gehäuseinneren zugewandten Seite eine Nut (8) mit beidseits hinterschnittenen Flächen aufweisen, vorgesehen sind, in die Nuten (8) hakenförmige, die hinterschnittenen Flächen hintergreifende Stege (11) von stranggepreßten Wandungsprofilen (4,5) eingeführt sind und zwischen den benachbarten, hakenförmigen Stegen (11) Spreizmittel (14; 23; 19) angeordnet sind, die die Stege (11) auf Öffnungsränder der Nut (8) pressen.

2. Gehäuse nach Anspruch 1, dadurch gekennzeichnet, daß zur teilweisen oder vollständigen Abdeckung der Stirnöffnungen des Gehäuses (1) Platten (6,7) vorgesehen sind.

3. Gehäuse nach Anspruch 1, dadurch gekennzeichnet, daß die hakenförmigen Stege (11) einstückig mit rechtwinklig sich von den die Längsseiten des Gehäuses (1) bildenden Wangen (13) zum Gehäuseinnern erstreckenden Leisten (12) sind, die von den Längsrändern ausgehen.

4. Gehäuse nach einem der vorhergehenden Ansprüche, dadurch gekennzeichnet, daß die beiden Wandungsprofile (4,5,22) im Querschnitt übereinstimmen.

5. Gehäuse nach Anspruch 4, dadurch gekennzeichnet, daß das Wandungsprofil (4,5) benachbart einem Längsrand einen Winkelsteg (14,18) aufweist.

6. Gehäuse nach Anspruch 5, dadurch gekennzeichnet, daß die Winkelstege (14) der Wandungsprofile (4,5) unter Abstützung des freien Endes am gegenüberliegenden Wandungsprofil in eine gestreckte Lage bringbar sind.

7. Gehäuse nach Anspruch 6, dadurch gekennzeichnet, daß an der vom Winkelsteg (14) freien Innenseite des Wandungsprofils benachbart dem Längsrand eine Nockenleiste (17) vorgesehen ist und das freie Ende des Winkelstegs (14) des gegenüberliegenden Wandungsprofils sich an der Nockenleiste (17) oder in der Nähe der Nockenleiste (17) abstützt.

8. Gehäuse nach Anspruch 5, dadurch gekennzeichnet, daß ein Stegteil (19) in der Längsmittelebene (20) des Gehäuses liegt und in den von den hakenförmigen Stegen (11) der Wandungsprofile begrenzten Spaltraum (21) eintreibbar ist.

9. Gehäuse nach Anspruch 1, dadurch gekennzeichnet, daß als Spreizmittel sich teilweise in die hakenförmigen Stege (11) einschneidende Gewindestifte (23) in den Spaltraum zwischen den hakenförmigen Stegen eingeschraubt sind.

## Claims

1. A housing for accommodating transmission means of a conveyor characterised in that to form the narrow sides which extend in the longitudinal direction there are provided shaped bars (2, 3) which at least at the side towards the housing interior have a groove (8) with surfaces of an undercut configuration on both sides, inserted into the grooves (8) are hook-shaped limb portions (11) of extruded wall profile members (4, 5), the limb portions engaging behind the surfaces of undercut configuration, and arranged between the adjacent hook-shaped limb portions (11) are spreading means (14; 23; 19) which press the limb portions (11) against edges of the opening of the groove (8).

2. A housing according to claim 1 characterised in that plates (6, 7) are provided for partially or completely covering over the end openings of the housing (1).

3. A housing according to claim 1 characterised in that the hook-shaped limb portions (11) are in one piece with bar portions (12) which project from the longitudinal edges and which extend towards the interior of the housing from the side portions (13) which form the longitudinal sides of the housing (1).

4. A housing according to one of the preceding claims characterised in that the two wall profile members (4, 5, 22) are of the same cross-section.

5. A housing according to claims 4 characterised in that the wall profile members (4, 5) has an angled limb portion (14, 18) adjacent a longitudinal edge.

6. A housing according to claim 5 characterised in that the angled limb portions (14) of the wall profile members (4, 5) can be moved into an extended position with the free end being supported against the oppositely disposed wall profile member.

7. A housing according to claim 6 characterised in that a projecting bar portion (17) is provided adjacent the longitudinal edge at the inside of the wall profile member which is free of the angled limb portion (14) and the free end of the angled limb portion (14) of the oppositely disposed wall profile member is supported against the projecting bar portion (17) or in the vicinity of the projecting bar portion (17).

8. A housing according to claim 5 characterised in that a limb part (19) is disposed in the longitudinal central plane (20) of the housing and can be driven into the gap (21) defined by the hook-shaped limb portions (11) of the wall profile member.

9. A housing according to claim 1 characterised in that screwthreaded pins (23) which partially cut into the hook-shaped limb portions (11) are screwed into the gap between the hook-shaped limb portions, as spreading means.

## Revendications

1. Boîtier destiné à recevoir des moyens de transmission d'un convoyeur, caractérisé en ce que, pour former les côtés étroits s'étendant dans la direction longitudinale, des rails profilés (2, 3) sont prévus qui présentent du côté tourné vers l'intérieur du boîter au moins une rainure (8) comportant des surfaces en contre-dépouille des deux côtés, dans les rainures sont introduites des ailes (11) en forme de crochet, de profilés de paroi extrudés (4, 5), saisissant par l'arrière les surfaces en contre-dépouille, et des moyens d'écartement (14; 23; 19) sont disposés entre les ailes (11) en forme de crochets voisines, lesquels pressent les ailes (11) contre des bords d'ouverture de la rainure (8).

2. Boîtier selon la revendication 1, caractérisé en ce que des plaques (6, 7) sont prévues pour recouvrir partiellement ou complètement les ouvertures frontales du boîtier (1).

3. Boîtier selon la revendication 1, caractérisé en ce que les ailes (11) en forme de crochets ne forment qu'une pièce avec des barres (12) s'étendant perpendiculairement vers l'intérieur du boîtier depuis les flancs (13) formant les côtés longitudinaux du boîtier (1), et qui partent des bords longitudinaux.

4. Boîtier selon l'une des revendications précédentes, caractérisé en que les deux profilés de paroi (4, 5, 22) ont la même section transversale.

5. Boîtier selon la revendication 4, caractérisé en ce que le profilé de paroi (4, 5) présente une cornière (14) à proximité d'un bord longitudinal.

6. Boîtier selon la revendication 5, caractérisé en ce que les cornières (14) des profilés de paroi (4, 5) peuvent être amenées dans une position étirée avec appui de l'extrémité libre contre le profilé de paroi opposé.

7. Boîtier selon la revendication 6, caractérisé en ce que, du côté intérieur du profilé de paroi exempt de cornière (14), à proximité du bord longitudinal, il est prévu une moulure en saillie (17), et l'extrémité libre de la cornière (14) du profilé de paroi opposé s'appuie contre la moulure en saillie (17) ou à proximité de la moulure en saillie (17).

8. Boîtier selon la revendication 5, caractérisé en ce qu'une nervure (19) se trouve dans le plan longitudinal médian (20) du boîtier et peut s'enfoncer dans l'interstice (21) délimité par les ailes (11) en forme de crochet des profilés de paroi.

9. Boîtier selon la revendication 1, caractérisé en ce que, comme moyen d'écartement, des tiges filetées (23) qui se noient en partie dans les ailes, (11) en forme de crochets sont vissées dans l'interstice entre les ailes en forme de crochet.
